# EUROPEAN PATENT SPECIFICATION

(11) **EP 2 900 773 B1**
(45) Date of publication and mention of the grant of the patent: **27.01.2021**
(21) Application number: 13771186.7
(22) Date of filing: 25.09.2013
(51) Int. Cl.: C09D 11/101, C09D 11/38, C09D 11/00

(54) **PRINTING INK**
DRUCKTINTE
ENCRE D'IMPRESSION

(30) Priority: 25.09.2012 GB 201217058
(43) Date of publication of application: 05.08.2015
(73) Proprietor: Sericol Limited, Broadstairs, Kent CT10 2LE (GB)
(72) Inventor: GOULD, Nigel, Broadstairs Kent CT10 2LE (GB); WARD, Jeremy, Broadstairs Kent CT10 2LE (GB); MCGREGOR, Barry, Broadstairs Kent CT10 2LE (GB); SEXTON, Lee, Broadstairs Kent CT10 2LE (GB)
(74) Representative: Elkington and Fife LLP
(86) International application number: PCT/GB2013/052500
(87) International publication number: WO 2014/049348

(56) References cited:
- US-A1- 2002 149 659
- US-A1- 2005 165 135
- US-A1- 2011 190 429

## Description

The present invention relates to a printing ink, and particularly to a shear-thinning silica dispersion for an inkjet ink.

Inkjet printers comprise one or more printheads or reservoirs that include a series of nozzles through which ink is ejected onto a substrate. The printheads are typically provided on a printer carriage that traverses the print width (moves back and forth across the substrate) during the printing process. The ejected ink forms an image on the substrate. For high-speed printing, the inks must flow rapidly from the printing heads, and, to ensure that this happens, they must have, in use, a low viscosity. For this reason, ink-jet inks for application at or near ambient temperatures are commonly formulated to contain a large proportion of a mobile liquid vehicle or solvent.

In one common type of inkjet ink this liquid is water - see for example the paper by Henry R. Kang in the Journal of Imaging Science, 1991, 35(3), pages 179-188. In another common type, the liquid is a low-boiling solvent or mixture of solvents - see, for example, EP 0 314 403 and EP 0 424 714. Another type of inkjet ink contains unsaturated organic compounds, termed monomers, which polymerise by irradiation, commonly with ultraviolet light, in the presence of a photoinitiator. Yet another type of inkjet ink is termed a hybrid radiation-curable/solvent-containing inkjet ink, see, for example, WO 2011/021052.

In order to eject inkjet droplets from the printheads with the required velocity, typically around 6 m/s or higher, a low viscosity inkjet ink is required. The exact viscosity required is dependent upon the printhead that is being used. However, typically the required viscosities range from 3 to 12 mPas at jetting temperature.

Inkjet inks with higher viscosities can result in slow droplets, which can easily be deflected and hence lead to inaccurate placement on the substrate. Inks having lower viscosities give high velocity droplets with accurate placement. However such inks are prone to the formation of numerous small satellite drops, which can either land on the substrate or be deposited back onto the nozzle plate of the printhead. Both of these are undesirable and lead to a reduction in print quality. The formation of satellite drops, which land on the substrate results in ink being deposited in non-image areas and the deposit of satellite drops back on the nozzle plate of the printhead results in the build up of ink deposits causing blocked or deviated nozzles.

It has previously been proposed that the introduction of a degree of viscoelasticity in the inkjet ink can be useful in suppressing the formation of satellite drops. The inclusion of long chain polymer materials was found to impede the break up of the tail of fluid attached to the main droplet, hence reducing the level of satellite drop production. See for example, D.C. Vadillo, S.D. Hoath, W.-K. Hsiao, M.R. Mackley, Proc 27th Int. Conf. on Digital Printing Technologies, NIP27, Minneapolis, MN, USA, 2011, 568-572, 'The effect of inkjet ink composition on rheology and jetting behaviour'. Unfortunately however, the viscoelasticity also serves to reduce the velocity of the ejected droplet and suffers from inaccurate placement of the inkjet ink drops on to the substrate and is hence not a solution to this problem.

One approach for resolving these issues thereby allowing for accurate placement of the inkjet ink droplets on to the substrate whilst minimising satellite drop formation is to provide an inkjet ink which exhibits shear-thinning behaviour.

The level of shear experienced by an inkjet ink varies considerably during the ink jetting process. When the inkjet ink is being compressed and forced through the inkjet nozzle, the shear rate is high, in the order of 10⁶ s⁻¹. After ejection of the inkjet ink from the inkjet nozzle, the shear rate experienced by the inkjet ink rapidly falls back to near rest values. Under high levels of shear, a shear-thinning fluid has a low viscosity and hence is easily ejected at high velocity. Once the inkjet ink droplet has been ejected from the inkjet nozzle, the shear rate falls and viscosity rapidly increases. This increase in viscosity prevents the breakup of the inkjet ink and prevents the formation of numerous satellites.

There is therefore a need in the art to introduce this shear-thinning property into an inkjet ink, whilst maintaining all other properties required for an inkjet ink, such as particle size, stability and viscosity.

One approach has been to include silica in the inkjet ink.

The use of fumed silica is well known in the surface coatings industry and has long been used in such compositions to modify their rheological profiles. However, fumed silica has not found wide application in inkjet ink compositions owing to the difficulty in dispersing fumed silica into the ink.

In this respect, commercially available fumed silica typically has a primary particle size ranging from 5 to 50 nm. However, the fumed silica particles agglomerate to well over 1 µm. In non-inkjet ink applications, such as the surface coating industry, a particle size of this order is not detrimental to performance and the fumed silica can simply be stirred into the composition. However, such commercially available fumed silica is not useful for inkjet ink applications. Specifically, it is not possible simply to stir these materials into inkjet inks because there is insufficient shear force to break up the silica particle agglomerates and the resultant inkjet inks rapidly block a 3.0 µm filter.

US 2011/190429 describes a method for the preparation of a coloured ink that includes: preparing a white formulation that comprises sub-micron inorganic pigment; preparing a coloured formulation that comprises sub-micron organic pigment; and mixing and grinding the white ink formulation and the coloured ink formulation to provide a coloured ink formulation suitable for jet ink applications. A coloured ink that includes white sub-micron inorganic pigment and coloured sub-micron organic pigment; wherein the coloured ink is characterized by a high (colour) hiding power and colour density, and can meet the requirements of the PCB industry.

US 2005/165135 describes a liquid thermosetting ink for ink-jet applications containing at least a resin, at least one solid latent curing agent having a maximal particle size of less than 2 microns and an inert filler having fine particles. The single-pack or two-pack ink has a viscosity lower than 50 Cp at the application temperature, a surface tension lower than 80 dyn/cm at the application temperature, and a glass transition temperature of cured ink of greater than 120 °C.

US 2002/149659 describes compositions that incorporate surface modified, nanometer sized, inorganic oxide particles into energy curable fluids. The surface modification aspect allows the compatibility between the particles and fluid to be controllably adjusted to achieve a wide range of rheological characteristics. For printing, preferred compositions have favourable dot gain and thickness build up. When the composition is cured, the presence of the particles also helps improve physical properties such as hardness, modulus, abrasion resistance, refractive index, and the like. The compositions are particularly well-suited for forming printed, radiation cured features on substrates such as paper, signs, walkways, roadways, motor vehicles, boats, aircraft, furniture, equipment, and the like.

There are no inks currently available that have the combination of properties of shear-thinning and filterability. There is therefore a need in the art to provide a shear-thinning silica dispersion suitable for an inkjet ink.

Accordingly, the present invention provides a method of producing a shear-thinning silica dispersion for a radiation-curable inkjet ink comprising: providing a composition comprising fumed silica, an organic solvent and/or a reactive diluent and a radiation-curable oligomer or a passive thermoplastic resin; bead milling the composition using milling beads having a mean diameter of 0.3 to 1.0 mm, wherein the ratio of the volume of milling beads present in the composition during bead milling in mL to the weight of the composition in grams is 0.5 to 2.0 : 1.0, and wherein the viscosity of the composition during bead milling is 50-800 mPas at 1,000 s⁻¹; and removing the composition from the mill.

The inventors have surprisingly identified a shear-thinning silica dispersion and a dispersion method that provides such a shear-thinning silica dispersion that is suitable for inkjet printing and has the required particle size. After identifying this dispersion and method, it was not known if the fumed silica present in the shear-thinning silica dispersion which had been dispersed to an appropriate particle size for inkjet ink printing would still be capable of building the 3D network within the inkjet ink. Rheological profiling has now confirmed that the inks of the present invention that comprise the shear-thinning silica dispersion obtainable by the method of the present invention do exhibit shear-thinning behaviour after inkjet printing. When shear forces are applied to the inkjet ink, this 3D network is temporarily disrupted and the viscosity decreases. However, once the shear forces are removed from the inkjet ink, the 3D network rapidly rebuilds restoring the higher viscosity.

A further embodiment of the present invention provides a radiation-curable inkjet ink comprising: a shear-thinning silica dispersion obtainable by the method of the present invention, wherein the inkjet ink comprises at least 0.2 wt% fumed silica dispersed in the ink based on the total weight of the ink, wherein the viscosity of the inkjet ink at a shear rate of 5 s⁻¹ is 10% or more than the viscosity of the inkjet ink at a shear rate of 1,000 s⁻¹, and wherein the particle size of dispersed particles in the ink is such that the ink, when subjected to vacuum filtration, is capable of passing through a 3 µm filter at a pressure of 40 KPa. The filtration is typically performed at 25°C.

The present invention also provides a substrate having the inkjet ink printed thereon and a method of ink-jet printing, comprising printing the inkjet ink on to a substrate and curing the ink.

Thus, it has surprisingly been found that it is possible to provide a method that provides a dispersion comprising fumed silica that is suitable for inkjet printing and that when incorporated into an inkjet ink provides an inkjet ink that exhibits shear-thinning behaviour whilst maintaining properties required for inkjet printing.

The present invention will now be described with reference to the accompanying drawings, in which:
Fig. 1 shows a particle size distribution for a shear-thinning silica dispersion obtainable by the method of the present invention;
Fig. 2 shows a viscosity profile for the ink of the invention and a comparative example; and
Fig. 3 is a graph of the percentage of lost or deviated nozzles verses the jetting frequency for an inkjet ink of the present invention and a comparative inkjet ink.

The method of the present invention provides a shear-thinning silica dispersion that is suitable for radiation-curable inkjet inks. Without wishing to be bound by theory, it is believed that the inclusion of the shear-thinning silica dispersion obtainable by the method of the present invention in to an inkjet ink provides a 3D network, or structure, to the inkjet ink. It would at first be assumed that such an inkjet ink having such a shear-thinning silica dispersion present therein would have too high a viscosity for inkjet printing. However, the inkjet ink undergoes shear-thinning when the inkjet ink is jetted through the nozzle of an inkjet printhead owing to the application of shear forces which temporarily disrupts the 3D network. Therefore, at the point of jetting the inkjet ink from the nozzle, the ink has a sufficiently low viscosity to be ejected from the nozzle. However, once the shear forces are removed from the inkjet ink, the 3D network rapidly rebuilds or recovers, restoring the higher viscosity. Thus, accurate placement of the inkjet ink onto the substrate is achieved whilst minimising the formation of small satellite drops. The inkjet ink of the present invention also maintains the other required properties of inkjet inks, such as filterability and particle size.

The relative satellite formation is difficult to assess directly, however, their effects on jetting reliability and sustainability are more easily assessed and provide a good measure of the jetability of an ink. Poor print quality can occur when small droplets formed by the break-up of the drop ligament accumulate on the nozzle plate causing a build-up of ink. This ink deposit can eventually lead to either complete blocking of the inkjet nozzle or to deviated jet trajectory. This behaviour usually worsens as the jetting frequency is increased.

At frequencies up to 20 KHz, the system has sufficient time to re-establish equilibrium before the next pulse is fired; the meniscus in the nozzle returning to its at rest position. At higher frequencies, the meniscus position can vary depending on the timing to either reinforce or subtract from the ejection energy. This variation affects the ejection of the jet and leads to uneven break off. This variability makes exact matching of the waveform to control satellite formation impossible. It is believed that the addition of the shear-thinning silica dispersion having shear thinning behaviour stabilises the drop break off making the system far less sensitive to meniscus position and hence more controllable.

The composition to be bead milled comprises fumed silica, an organic solvent and/or a reactive diluent and a radiation-curable oligomer and/or a passive thermoplastic resin.

Fumed silica (also known as pyrogenic silica) exists in the form of microscopic particles of amorphous silica fused into three-dimensional secondary particles which then agglomerate into tertiary particles. The primary particle size is 5-50 nm. Fumed silica is commercially available, for example from Evonik under the trade name Aerosil® and from Cabot under the trade name Cab-o-sil®.

The fumed silica comprises hydrophilic fumed silica and/or hydrophobic fumed silica. Preferably, the fumed silica is hydrophilic fumed silica.

The organic solvent and/or reactive diluent comprises any organic solvent and/or reactive diluent suitable for use in inkjet inks. Thus, the ink formulator is able to select from a wide range of suitable organic solvents and/or reactive diluents, which are well known in the art.

Preferably, there is a difference in polarity between (i) the organic solvent and/or reactive diluent of the present invention and (ii) the fumed silica of the present invention, in order to allow for the 3D network (gel-like structure) to form. As the polarity of the organic solvent and/or reactive diluent increases, the efficiency of the formation of the 3D network decreases when using a hydrophilic fumed silica. This can be compensated for by using an increased amount of fumed silica.

The organic solvent and/or reactive diluent is thus preferably a non-wetting organic solvent and/or a non-wetting reactive diluent. Non-wetting means that the organic solvent and/or reactive diluent is selected such that the fumed silica is not wetted by the organic solvent and/or reactive diluent. The relative polarity of the fumed silica and the non-wetting organic solvent and/or non-wetting reactive diluent should be suitable to prevent the fumed silica particles from becoming wetted by the non-wetting organic solvent and/or non-wetting reactive diluent.

If fumed silica is dispersed in an organic solvent and/or reactive diluent, which possesses good wetting properties towards the surface of the fumed silica (i.e. the relative polarities of the solvent and the fumed silica are too close), then the fumed silica particles absorb molecules from the organic solvent and/or reactive diluent until the surface energy is minimised relative to the environment. This results in the fumed silica particles being wetted.

Such wetted particles which are densely covered by molecules identical to the surrounding organic solvent and/or reactive diluent float in the medium independently of each other. This means that the 3D network previously described cannot form and results in only a minor increase in viscosity of the dispersion compared to the organic solvent and/or reactive diluent alone. As a consequence and under the influence of gravity, the particles settle. This can be observed with hydrophilic fumed silica in hydrophilic fluids, such as alcohols, acetone and polar solvents.

This is in marked contrast to fumed silica dispersed in a non-wetting organic solvent and/or non-wetting reactive diluent. For example, hydrophilic fumed silica dispersed in non-polar solvents, such as mineral spirit. Such a combination results in an increase in viscosity of the dispersion. Likewise, the addition of hydrophobic fumed silica into polar solvents results in an increase in viscosity. In such cases, the polarity of the fumed silica and the non-wetting organic solvent and/or non-wetting reactive diluent differ such that wetting of the silica particles is prevented, i.e. the molecules of the non-wetting organic solvent and/or non-wetting reactive diluent cannot adsorb onto the surface of the fumed silica. Hence, the formation of a 3D network of the fumed silica particles may form, which results in an increase in viscosity and results in a gel-like structure. This 3D network forms in order to minimise the free energy of the surface of the fumed silica and it exhibits viscoelastic properties resulting in enhanced viscosity. Sedimentation is also inhibited because the solid particles are no longer free to sediment under the gravity.

The non-wetting solvent can be any solvent, which does not wet the fumed silica. The non-wetting reactive diluent can be any reactive diluent, which does not wet the fumed silica.

The composition to be bead milled comprises a radiation-curable oligomer and/or a passive thermoplastic resin.

Preferably the radiation-curable (i.e. polymerisable) oligomer is a (meth)acrylate oligomer.

The term "curable oligomer" has its standard meaning in the art, namely that the component is partially reacted to form a pre-polymer having a plurality of repeating monomer units, which is capable of further polymerisation. Such radiation curable-oligomers suitable for use in the present invention comprise a backbone, for example a polyester, urethane, epoxy or polyether backbone, and one or more radiation polymerisable groups. The oligomer preferably comprises a urethane backbone. The polymerisable group can be any group that is capable of polymerising upon exposure to radiation. Preferably the oligomers are (meth)acrylate oligomers. Preferably they are multifunctional and most preferably have a functionality of 2-6.

Particularly preferred radiation-curable materials are urethane acrylate oligomers as these have excellent compatibility with the inkjet ink in which the shear-thinning silica dispersion will be dispersed therein. Furthermore, the urethane acrylate oligomers provide adhesion and elongation properties to the inkjet ink that the dispersion is incorporated therein. For hybrid solvent/curable inks, tri-, tetra-, penta- or hexafunctional urethane acrylates, particularly hexafunctional urethane acrylates, are preferred as these yield films with good solvent resistance. For inks which cure solely by exposure to actinic radiation ("100% UV inks") lower functionality oligomers are preferred, typically di- or trifunctional.

Other suitable examples of radiation-curable oligomers include epoxy based materials such as bisphenol A epoxy acrylates and epoxy novolac acrylates, which provide fast cure speeds in the resulting inkjet ink of the present invention and provide cured films with good solvent resistance.

Preferred oligomers have a molecular weight of 450 to 4,000, more preferably 600 to 4,000. Molecular weights (number average) can be calculated if the structure of the oligomer is known or molecular weights can be measured using gel permeation chromatography using polystyrene standards.

In one embodiment the radiation-curable oligomer polymerises by free-radical polymerisation. In an alternative embodiment of the invention, the radiation-curable oligomer is capable of polymerising by cationic polymerisation.

Any radiation-curable oligomer that is compatible with the ink components of the final inkjet ink is suitable for use in the dispersion of the present invention. Thus, the ink formulator is able to select from a wide range of suitable oligomers.

Preferred oligomers for use in the invention have a viscosity of 50 mPa.s to 20 Pa.s at 60°C, more preferably 0.1 to 15 Pa.s at 60°C and most preferably 0.55 to 10 Pa.s at 60°C. Oligomer viscosities can be measured using an ARG2 rheometer manufactured by T.A. Instruments, which uses a 40 mm oblique / 2° steel cone at 60°C with a shear rate of 25 s⁻¹.

The composition may also contain a passive (or "inert") thermoplastic resin. Passive resins are resins which do not enter into the curing process, i.e. the resin is free of functional groups which polymerise under the curing conditions to which the ink is exposed. In other words, resin is not a radiation-curable material. The resin may be selected from epoxy, polyester, vinyl, ketone, nitrocellulose, phenoxy or acrylate resins, or a mixture thereof and is preferably a poly(methyl (meth)acrylate) resin. Methacrylate copolymers are preferred. The resin has a weight-average molecular weight of 70-200 KDa and preferably 100-150 KDa, as determined by GPC with polystyrene standards.

The radiation-curable oligomer and/or passive thermoplastic resin are preferably selected according to its compatibility with the inkjet ink that the shear-thinning silica dispersion is incorporated therein and is preferably chosen for the film properties required in the final inkjet ink. As is shown in the inkjet ink of Example 1, a radiation-curable oligomer for the shear-thinning silica dispersion was chosen to coincide with the final inkjet ink which the shear-thinning silica dispersion was incorporated therein. Specifically, the radiation-curable oligomer, which was chosen in this case, was chosen to be the same as that which was to be incorporated in the inkjet ink of the present invention. As shown in Example 1 of the present invention, the radiation-curable oligomer was added to the milling composition to adjust the viscosity of the milling dispersion.

It is believed that the presence of the radiation-curable oligomer and/or passive thermoplastic resin is required in order to provide a shear-thinning silica dispersion that has the required particle size for an inkjet ink. Specifically, it was noted that in the absence of the radiation-curable oligomer and/or passive thermoplastic resin, i.e. using only a blend of solvent and fumed silica in the milling dispersion, it was not possible to achieve a fine enough dispersion for inkjet inks. It is believed that this is due to the low viscosity of the ink medium comprising only solvent and fumed silica under the high shear level in the chamber of the mill. Whilst the mixture of solvent and fumed silica had a reasonably high viscosity at low shear rate, when passing through the mill, the shear rate experienced by the medium is far higher and the viscosity rapidly falls.

Therefore, in order to maximise the efficiency of the milling process, it is vital to balance the viscosity of the composition during milling (i.e. the composition that is undergoing bead milling or milling dispersion) in the mill chamber. If the viscosity is too low, the energy transfer from the mill to the composition during milling is inefficient and the energy of the collisions is too low to break the agglomerations of fumed silica particles, meaning that a shear-thinning silica dispersion having the required particle size is not provided. However, it has been noted by the inventors of the present invention that the addition of a sufficient amount of radiation-curable oligomer and/or passive thermoplastic resin to the composition, allows for the maintenance of an adequate viscosity at high shear levels and hence allows for the prevention of agglomerates of fumed silica particles and the provision of a shear-thinning dispersion having a particle size suitable for inkjet inks.

There is however an upper level to this ideal viscosity. If the viscosity is too high, the mill will start to overheat and the mill speed will need to be reduced once again hindering the milling process.

Therefore, the viscosity of the composition during bead milling must be controlled. Specifically, the composition during bead milling should have a viscosity of 50 to 800 mPas at 1,000 s⁻¹, more preferably 200 to 600 mPas and most preferably 200 to 400 mPas. The viscosity can be measured using an ARG 2 rheometer fitted with an aluminium light weight cone; 60 mm diameter with a one degree angle.

The method of the present invention comprises bead milling a composition according to claim 1, wherein the milling beads have a mean diameter of 0.3 to 1.0 mm.

The bead size will affect the final particle size of the non-shear thinning silica dispersion. As it is known in the art, the milling process occurs by the collision of the milling beads with that of the composition. Larger beads have larger interstitial volume between them when packed together and hence once the average particle size of the fumed silica falls below this volume the particles simply fall in to the voids of the milling beads and cannot be broken down any further. Consequently, the mean bead diameter is 0.3 to 1.0 mm, more preferably 0.5 to 1 mm and most preferably 0.5 to 0.8 mm.

The amount of milling beads required in the composition during bead milling is also vital to provide the required particle size of the shear-thinning silica dispersion. Specifically, the ratio of the volume of milling beads present in the milling dispersion in mL to the weight of the composition in grams is 0.5 to 2.0:1.0. Preferably, the milling beads are present in an equivalent amount to that of the composition of the present invention. In other words, preferably, for each 100 g of the composition, an equivalent volume of milling beads is added, around 100 mL.

Milling beads are known in the art. Milling beads are selected for their uniformity and resistance to wear over prolonged uses. Any suitable milling beads can be used. Preferably, zirconium oxide beads are used in the method of the present invention. More preferably of 0.7 µm zirconium oxide beads are used as milling beads in the method of the present invention.

Any milling machine may be used. However, the method of the present invention may be carried out on a Dispermat mill SL 5-200 supplied by VMA Getzmann. This machine has a maximum speed of 6,000 rpm and tip speed of 25.4 m/s.

Preferably, the mill speed is 3,000 to 6,000 rpm, more preferably 4,000 to 6,000 rpm and most preferably 5,000 to 6,000 rpm. Note that 3,000 to 6,000 rpm is equivalent to a tip speed of 20.6 to 25.4 m/s.

The milling end point is defined by a minimum milling time which is required to provide a shear-thinning silica dispersion that is suitable for an inkjet ink and hence has a particle size that is suitable for inkjet printing. The bead milling is hence continued until the particle size of the fumed silica is suitable for inkjet printing.

This can be tested by assessing the particle size of the fumed silica in the composition. The particle size distribution can be measured by a light scattering using, for example, a Malvern Mastersizer 2000. This is shown in Example 1.

In order for the particle size of the fumed silica in the composition to be suitable for inkjet printing, the particle size should be 1.5 µm or less and preferably 1.0 µm or less.

This can also be tested by vacuum filtration. A sample of the composition is taken and diluted with the non-wetting solvent to provide a silica concentration of 0.5 wt%. The diluted sample is then placed through a 3.0 µm filter at a pressure of 40 KPa at 25°C and the time taken for the first 10% by volume of the diluted sample and the fifth 10% by volume of the diluted sample to pass through the filter is measured. The fifth 10% of the diluted sample should take 1.5 times or less than the first 10% to pass through the filter for the particle size to be suitable for inkjet printing. This is shown in Example 1.

In a further embodiment of the present invention, there is provided a shear-thinning silica dispersion prepared according to the process discussed hereinabove, which is incorporated into an inkjet ink to provide an inkjet ink that exhibits shear-thinning behaviour whilst maintaining properties required for inkjet printing.

The present invention further provides a radiation-curable inkjet ink comprising: a shear-thinning silica dispersion obtainable by the method of the present invention, wherein the inkjet ink comprises at least 0.2 wt% fumed silica dispersed in the ink based on the total weight of the ink; wherein the viscosity of the inkjet ink at a shear rate of 5 s⁻¹ is 10% or more than the viscosity of the inkjet ink at a shear rate of 1,000 s⁻¹; and wherein the particle size of the ink is such that the ink when subjected to vacuum filtration is capable of passing through a 3 µm filter at a pressure of 40 KPa.

The inkjet inks of the present invention are shear-thinning inkjet inks, which allows for accurate placement of the inkjet ink drops on the substrate and reduces satellite formation. The inkjet inks of the present invention are also suitable as inkjet inks and have a particle size that allows for filterability which is required for inkjet inks. Inkjet inks which have such a combination of properties are not known in the art.

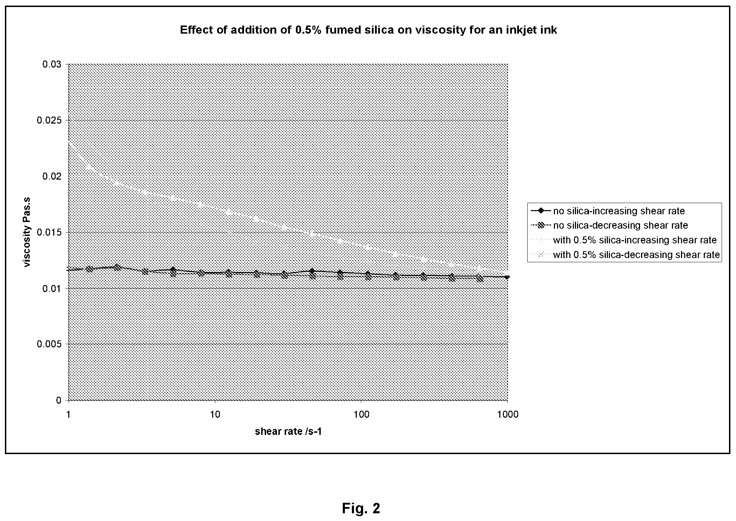

The inkjet ink of the present invention comprises at least 0.2 wt% fumed silica dispersed in the ink based on the total weight of the ink, preferably at least 0.5 wt%. As discussed hereinabove, the fumed silica imparts shear-thinning behaviour on the inkjet inks. The viscosity of the inkjet ink at a shear rate of 5 s⁻¹ is 10% or more, preferably 20% or more, than the viscosity of the inkjet ink at a shear rate of 1,000 s⁻¹. In other words, when the viscosity of the inkjet ink at a shear rate of 1,000 s⁻¹ is assigned the value of 1, the viscosity of the inkjet ink at a shear rate of 5 s⁻¹ is 1.1 or more, preferably 1.2 or more when compared to the viscosity of the inkjet ink at 1,000 s⁻¹ shear. This can be seen in Figure 2 of the present invention. When the inkjet ink of the present invention is at 1,000 s⁻¹ shear, the inkjet ink of the invention reaches a minimum value. The viscosity at 1,000 s⁻¹ shear is assigned a value of 1. The inkjet ink of the present invention has a viscosity at 5 s⁻¹ shear of 1.1 or more when compared with the viscosity of the ink at 1,000 s⁻¹ shear. The ratio of the viscosity of the inkjet ink at 1,000 s⁻¹ shear to the viscosity of the inkjet ink at 5 s⁻¹ shear is 1 : 1.1 or more, respectively.

The viscosities of the inkjet ink at differing shear are provided as a ratio. The curve of the graph of Figure 2 will differ depending on the nature of the 3D silica network formed in that particular compositional system.

Inkjet inks known in the art which do not comprise fumed silica experience only a slight change in viscosity at varying shear as can be seen in Figure 2 of the present invention.

The particle size of the ink is such that the ink when subjected to vacuum filtration is capable of passing through a 3 µm filter at a pressure of 40 KPa at 25°C. Inkjet inks that fail to pass through a 3 µm filter at a pressure of 40 KPa at 25°C have a tendency to block inkjet ink nozzles and hence do perform reliably. The fumed silica must be processed in such a way as to pass through a 3 µm filter at a pressure of 40 KPa at 25°C. An example of such a process is the method of providing a fumed silica dispersion as discussed hereinabove.

The organic solvent and/or reactive diluent is as discussed above for the dispersion obtainable by the method of the present invention. The radiation-curable oligomer and/or a passive thermoplastic resin is also as discussed above for the dispersion obtainable by the method of the present invention.

The present invention provides inkjet inks which contain the shear-thinning silica dispersion prepared according to the method of the present invention. The dispersion imparts a shear-thinning behaviour to the inkjet ink, which allows for accurate placement of the inkjet ink drops on the substrate and reduces satellite formation, whilst allowing the ink to maintain the properties required of an inkjet ink, in particular the filterability of the inkjet ink.

The total amount of shear-thinning silica dispersion present in the inkjet inks of the present invention is preferably from 1 to 20 wt%, based on the total weight of the ink. More preferably, the shear-thinning silica dispersion is present from 5 to 15 wt% based on the total weight of the ink and most preferably from 7 to 12 wt% based on the total weight of the ink. The dispersion preferably contains 1-10 wt% of silica, more preferably 3-7 wt%, based on the total weight of the dispersion. The shear-thinning silica dispersion has general applicability across inkjet inks.

The inkjet inks of the present invention take the form of radiation-curable inkjet ink composition. There is no limitation to the formulation of the radiation-curable inkjet inks of the present invention and may be formulated in any manner to provide the required inkjet ink properties.

In the present invention, the inkjet ink is a radiation-curable inkjet ink.

The inkjet inks of the present invention may comprise various components that are suitable for a radiation-curable inkjet ink and which are known to the skilled person in the art.

The inkjet ink may comprise an organic solvent, which is in the form of a liquid at ambient temperatures and is capable of acting as a carrier for the remaining components of the ink. The organic solvent component of the ink may be a single solvent or a mixture of two or more solvents. The solvent can be selected from any solvent commonly used in the printing industry, such as glycol ethers, glycol ether esters, alcohols, ketones, esters, organic carbonates, lactones and pyrrolidones. Solvent should, however, be compatible with the 3D silica network, as previously discussed.

In a preferred embodiment the organic solvent is a low toxicity and/or a low odour solvent. Solvents that have been given VOC exempt status by the United States Environmental Protection Agency or European Council are also preferred.

The most preferred solvents are selected from glycol ethers and organic carbonates and mixtures thereof. Cyclic carbonates such as propylene carbonate and mixtures of propylene carbonate and one or more glycol ethers are particularly preferred.

Alternative preferred solvents include lactones, which have been found to improve adhesion of the ink to PVC substrates. Mixtures of lactones and one or more glycol ethers, and mixtures of lactones, one or more glycol ethers and one or more organic carbonates are particularly preferred. Mixtures of gamma butyrolactone and one or more glycol ethers, and mixtures of gamma butyrolactone, one or more glycol ethers and propylene carbonate are particularly preferred.

Dibasic esters and/or bio-solvents may be used.

Dibasic esters are known solvents in the art. They can be described as di(C₁-C₄ alkyl) esters of a saturated aliphatic dicarboxylic acid having 3 to 8 carbon atoms having following general formula: 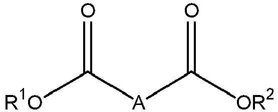 in which A represents (CH₂)₁₋₆, and R¹ and R² may be the same or different and represent C₁-C₄ alkyl which may be a linear or branched alkyl radical having 1 to 4 carbon atoms, preferably methyl or ethyl, and most preferably methyl. Mixtures of dibasic esters can be used.

Bio-solvents, or solvent replacements from biological sources, have the potential to reduce dramatically the amount of environmentally-polluting VOCs released in to the atmosphere and have the further advantage that they are sustainable. Moreover, new methods of production of bio-solvents derived from biological feedstocks are being discovered, which allow bio-solvent production at lower cost and higher purity.

Examples of bio-solvents include soy methyl ester, lactate esters, polyhydroxyalkanoates, terpenes and non-linear alcohols, and D-limonene. Soy methyl ester is prepared from soy. The fatty acid ester is produced by esterification of soy oil with methanol. Lactate esters preferably use fermentation-derived lactic acid which is reacted with methanol and/or ethanol to produce the ester. An example is ethyl lactate which is derived from corn (a renewable source) and is approved by the FDA for use as a food additive. Polyhydroxyalkanoates are linear polyesters which are derived from fermentation of sugars or lipids. Terpenes and non-linear alcohols may be derived from corn cobs/rice hulls. An example is D-limonene which may be extracted from citrus rinds.

Other solvents may be included in the organic solvent component. A particularly common source of other solvents is derived from the way in which the colouring agent is introduced into the inkjet ink formulation. The colouring agent is usually prepared in the form of a pigment dispersion in a solvent, e.g. 2-ethylhexyl acetate. The solvent tends to be around 40 to 50% by weight of the pigment dispersion based on the total weight of the pigment dispersion.

The inkjet ink may further comprise radiation-curable monomers (e.g. having a molecular weight of less than 450). Suitable free-radical polymerisable monomers are well known in the art and include (meth)acrylates, α,β-unsaturated ethers, vinyl amides and mixtures thereof.

Monofunctional (meth)acrylate monomers are well known in the art and are preferably the esters of acrylic acid. Preferred examples include phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA), lauryl acrylate and mixtures thereof. The preferred examples of monofunctional (meth)acrylate monomers have the following chemical structures:

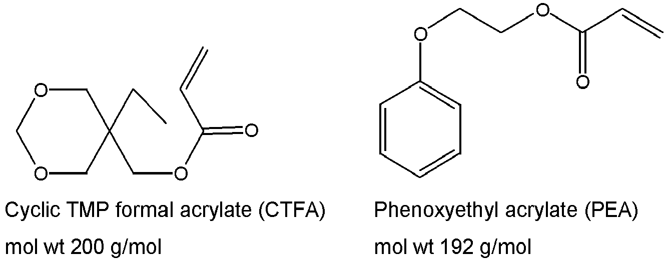

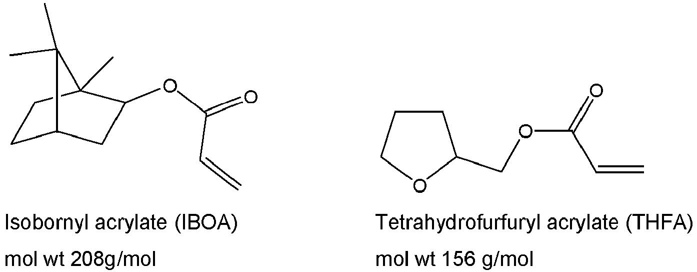

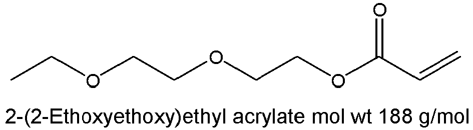

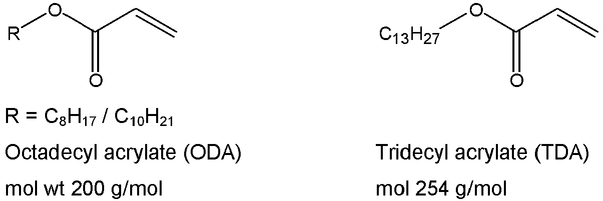

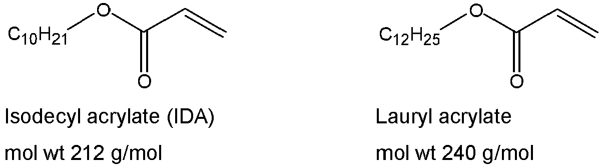

The substituents of the monofunctional monomers are not limited other than by the constraints imposed by the use in an ink-jet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

α,β-Unsaturated ether monomers may also be included in the inkjet ink of the invention and can polymerise by free-radical polymerisation and may be useful for reducing the viscosity of the ink when used in combination with one or more (meth)acrylate monomers. Examples are well known in the art and include vinyl ethers such as triethylene glycol divinyl ether, diethylene glycol divinyl ether, 1,4-cyclohexanedimethanol divinyl ether and ethylene glycol monovinyl ether. Mixtures of α,β-unsaturated ether monomers may be used.

N-Vinyl amides and N-(meth)acryloyl amines may also be used in the inkjet inks of the invention. N-vinyl amides are well-known monomers in the art and a detailed description is therefore not required. N-vinyl amides have a vinyl group attached to the nitrogen atom of an amide which may be further substituted in an analogous manner to the (meth)acrylate monomers. Preferred examples are N-vinyl caprolactam (NVC) and N-vinyl pyrrolidone (NVP). Similarly, N-acryloyl amines are also well-known in the art. N-acryloyl amines also have a vinyl group attached to an amide but via the carbonyl carbon atom and again may be further substituted in an analogous manner to the (meth)acrylate monomers. A preferred example is N-acryloylmorpholine (ACMO).

The inkjet ink of the present invention may further contain a multifunctional (meth)acrylate monomer. Multifunctional (meth)acrylate monomers are also well known in the art and have a functionality of two or higher. Suitable multifunctional (meth)acrylate monomers include di-, tri- and tetra-functional monomers. Functionalities of two, three or four are preferred and preferably this monomer is a difunctional or trifunctional monomer.

Examples of the multifunctional acrylate monomers that may be included in the inkjet ink include hexanediol diacrylate, trimethylolpropane triacrylate, pentaerythritol triacrylate, polyethyleneglycol diacrylate (for example tetraethyleneglycol diacrylate), dipropyleneglycol diacrylate, tri(propylene glycol) triacrylate, neopentylglycol diacrylate, bis(pentaerythritol) hexaacrylate, 3-methyl pentanediol diacrylate, and the acrylate esters of ethoxylated or propoxylated glycols and polyols, for example, propoxylated neopentyl glycol diacrylate, ethoxylated trimethylolpropane triacrylate, and mixtures thereof.

In addition, suitable multifunctional methacrylate monomers also include esters of methacrylic acid (i.e. methacrylates), such as hexanediol dimethacrylate, trimethylolpropane trimethacrylate, triethyleneglycol dimethacrylate, diethyleneglycol dimethacrylate, ethyleneglycol dimethacrylate, 1,4-butanediol dimethacrylate and mixtures thereof. Mixtures of (meth)acrylates may also be used.

The monomers typically have a viscosity of less than 2 mPas at 25°C and they typically have a molecular weight of more than 200 and less than 450.

The inkjet ink may also contain a radiation-curable (i.e. polymerisable) oligomer as described hereinabove for the shear-thinning silica dispersion.

By "radiation-curable material" is meant a material that polymerises or crosslinks when exposed to actinic radiation, commonly ultraviolet light, in the presence of a photoinitiator.

(Meth)acrylate is intended herein to have its standard meaning, i.e. acrylate and/or methacrylate. Mono and multifunctional are also intended to have their standard meanings, i.e. one and two or more groups, respectively, which take part in the polymerisation reaction on curing.

The inkjet ink may also contain a passive thermoplastic resin as described hereinabove for the shear-thinning silica dispersion.

The inkjet ink of the present invention may comprise a cationically curable monomer. Suitable cationically curable materials include, oxetanes, cycloaliphatic epoxides, bisphenol A epoxides, epoxy novolacs and the like. The radiation-curable material according to this embodiment may comprise a mixture of cationically curable monomer and oligomer. For example, the radiation-curable material may comprise a mixture of an epoxide oligomer and an oxetane monomer.

The inks of the invention may include one or more photoinitiators which, under irradiation, for example by ultraviolet light, initiates the polymerisation of the monomers. When the inks of the invention include a free-radical polymerisable material the photoinitiator system includes a free-radical photoinitiator and when the inks include a cationic polymerisable material the photoinitiator system includes a cationic photoinitiator. When the inks comprise a combination of free-radical polymerisable and cationically polymerisable materials both a free-radical and cationic initiator are required.

The free-radical photoinitiator can be selected from any of those known in the art. For example, benzophenone, 1-hydroxycyclohexyl phenyl ketone, 1-[4-(2-hydroxyethoxy)-phenyl]-2-hydroxy-2-methyl-1-propane-1-one, 2-benzyl-2-dimethylamino-(4-morpholinophenyl)butan-1-one, isopropyl thioxanthone, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure and Darocur (from Ciba) and Lucerin (from BASF).

The wavelength of the radiation and the nature of the photoinitiator system used must of course coincide. The ink is preferably cured by irradiation with actinic radiation, such as UV, x-ray, electron beam etc., although UV curing is preferred.

In the case of a cationically curable system, any suitable cationic initiator can be used, for example sulfonium or iodonium based systems. Non limiting examples include: Rhodorsil PI 2074 from Rhodia; MC AA, MC BB, MC CC, MC CC PF, MC SD from Siber Hegner; UV9380c from Alfa Chemicals; Uvacure 1590 from UCB Chemicals; and Esacure 1064 from Lamberti spa. Further suitable cationic photoinitiators are be sold under the Trade names of Irgacure 184, Irgacure 500, Darocure 1173, Irgacure 907, ITX, Lucerin TPO, Irgacure 369, Irgacure 1700, Darocure 4265, Irgacure 651, Irgacure 819, Irgacure 1000, Irgacure 1300, Esacure KT046, Esacure KIP150, Esacure KT37, Esacure EDB, H-Nu 470, H-Nu 470X, the Union Carbide UVI-69-series, Deuteron UV 1240 and IJY2257, Ciba Irgacure 250 and CGI 552, IGM-C440, Rhodia 2047 and UV9380c.

The inkjet ink may be a colourless or white ink. By "colourless" is meant that the ink is substantially free of colorant such that no colour can be detected by the naked eye. Minor amounts of colorant that do not produce colour that can be detected by the eye can be tolerated, however. Colourless inks may also be described as "clear" or "water white". The white ink includes a dispersed white pigment.

The inkjet ink of the present invention may also include a colouring agent, which may be either dissolved or dispersed in the liquid medium of the ink. Preferably the colouring agent is a dispersed pigment, of the types known in the art and commercially available such as, for example, under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19 and Pigment Black 7. Especially useful are black and the colours required for trichromatic process printing. Mixtures of pigments may be used.

In one aspect of the invention the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an ink-jet nozzle, typically having a particle size less than 8 µm, preferably less than 5 µm, more preferably less than 1 µm and particularly preferably less than 0.5 µm.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

In one aspect of the invention the surface tension of the ink is controlled by the addition of one or more surface active materials such as commercially available surfactants. Adjustment of the surface tension of the inks allows control of the surface wetting of the inks on various substrates, for example, plastic substrates. Too high a surface tension can lead to ink pooling and/or a mottled appearance in high coverage areas of the print. Too low a surface tension can lead to excessive ink bleed between different coloured inks. The surface tension is preferably in the range of 20-32 mNm⁻¹ and more preferably 21-27 mNm⁻¹.

The present invention also provides a method of ink-jet printing using the above-described ink and a substrate having the cured ink thereon. Suitable substrates include styrene, PolyCarb (a polycarbonate), BannerPVC (a PVC), VIVAK (a polyethylene terephthalate glycol modified), polyolefin substrates, such as polyethylene and polypropylene, e.g. PE85 Trans T/C, PE85 White or PP Top White, polyethylene terephthalate (PET) and paper.

The ink-jet ink exhibits a desirable low viscosity (less than 200 mPas, preferably less than 100 mPas, preferably less than 50 mPas and most preferably less than 25 mPas at 25°C). Viscosity may be measured at 1000 s⁻¹ on a ARG 2 rheometer fitted with an aluminium light weight cone, 60 mm diameter with a one degree angle.

The inks of the invention may be prepared by known methods such as, for example, stirring with a high-speed water-cooled stirrer, or milling on a horizontal bead-mill.

The ink is preferably substantially free of water, although some water will typically be absorbed by the ink from the air or be present as impurities in the components of the inks, and such levels are tolerated. For example, the inks may comprise less than 5% by weight of water, more preferably less than 2% by weight of water and most preferably less than 1% by weight of water, based on the total weight of the ink.

The present invention may also use an ink set comprising a cyan ink, a magenta ink, a yellow ink and a black ink (a so-called trichromatic set), wherein at least one of the inks is an ink according to the present invention. Preferably all of the inks in the ink set are inks according to the present invention. The inks in a trichromatic set can be used to produce a wide range of colours and tones.

Printheads account for a significant portion of the cost of an entry level printer and it is therefore desirable to keep the number of printheads (and therefore the number of inks in the ink set) low. Reducing the number of printheads can reduce print quality and productivity. It is therefore desirable to balance the number of printheads in order to minimise cost without compromising print quality and productivity.

The invention will now be described with reference to the following examples, which are not intended to be limiting.

### Examples

### Example 1

A composition was prepared according to the components set out in Table 1. The composition was prepared by first dissolving the Nippon Gohsei UV7630 B in the DEGDEE solvent in the given amounts using a high speed Silverson mixer. Once fully dispersed the Cab-o-sil M5 was slowly added in the given amount and stirred for 30 minutes. Amounts are given as weight percentages based on the total weight of the composition.

**Table 1**

| Component | Weight percentage |
|---|---|
| Diethylene glycol diethyl ether (DEGDEE) | 50.0 |
| Cab-o-sil M5 (untreated fumed silica having an average particle size of 0.2-0.3 microns) | 5.0 |
| Nippon Gohsei UV7630B (UV curable urethane acrylate oligomer) | 45.0 |
| Total | 100 |

The composition was then transferred to a Dispermat bead mill loaded with 100 mL of zirconium oxide milling beads with a mean diameter of 0.7 mm. The mill was run in recirculation mode at 6,000 rpm for 1 hour. Reticulation mode allows for the milled material to exit the mill chamber to be pumped back into the bulk material such that the milling dispersion is continuously passed back through the milling chamber. The maximum temperature was controlled to 45°C with water cooling.

After 1 hour of milling the milling dispersion was diluted with DEGDEE in a ratio of 1 parts milling dispersion to 9 parts DEGDEE. Vacuum filterability was then checked (at a pressure of 40 KPa) through a 1.5 µm filter with 50 mL of the blend passing through with no evidence of flow rate slowing. Specifically, the time taken for the first 10 mL to pass through the filter was noted and the time taken for the fifth 10 mL to pass through the same filter was noted. To meet pass criteria the last 10 mL should take no longer than 1.5 times the time for the first 10 mL to flow through the filter and there should be no visible residue on the filter paper.

The suitability of the shear-thinning silica dispersion for an inkjet ink was further investigated by assessing the particle size of the fumed silica in the dispersion.

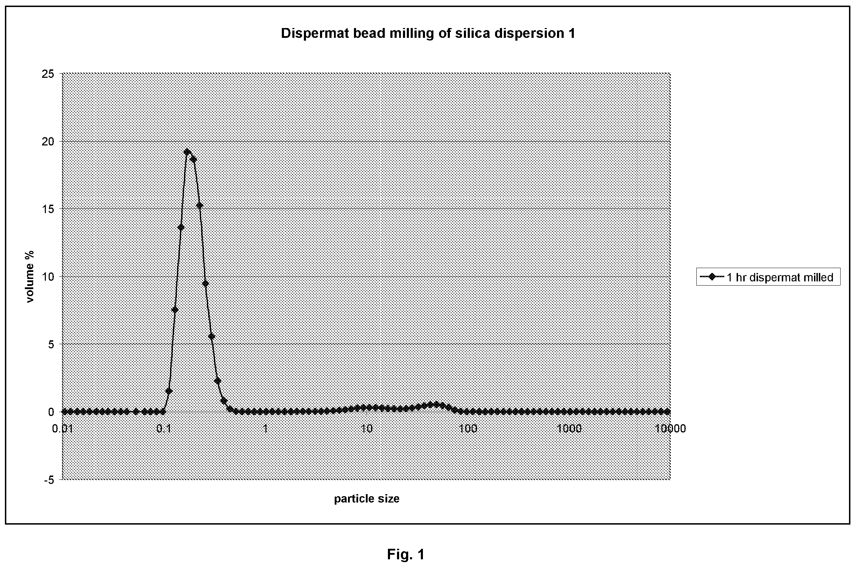

Malvern data were collected for the shear-thinning dispersion of Example 1. A particle size distribution of the shear-thinning silica dispersion of Example 1 was produced by using a light scattering technique using a Mastersizer 2000 supplied by Malvern, see Fig. 1. The solvent carrier used was butyl glycol acetate. To obtain particle size, it was necessary to input the refractive index of the particle along with an imaginary refractive index. The imaginary refractive index is to take account of the shape of the particle and light absorption of its surface. The refractive index used was 1.544 and the imaginary index was 0.01.

As can be seen from Fig. 1, the particle size of the dispersion obtainable by the method of the invention is suitable for an inkjet ink and is submicron.

To investigate if another high shear dispersion method could also be employed a small sample of the composition of Table 1 was checked after stirring for 30 minutes with a rotor stator high shear mixer (Silverson). Malvern data were therefore collected for this dispersion after high speed stirring. However, this did not provide a satisfactory result and provided a bimodal dispersion.

### Example 2

The shear-thinning silica dispersion obtained as described hereinabove was used to prepare a solvent UV hybrid ink with 0.5 % Cab-o-sil M5 content by mixing the components of Table 2. The amounts are provided in weight percentages based on the total weight of the ink.

**Table 2**

| Components | Weight percentage |
|---|---|
| DEGDEE | 46.6 |
| Silica dispersion of Example 1 | 10.0 |
| Gamma butyrolactone | 16.3 |
| Genomer 4215 (aliphatic polyester urethane acrylate resin) | 9.0 |
| Nippon Gohsei UV7630B | 5.5 |
| Cyan pigment dispersion | 6.0 |
| Irgacure 819 | 4.0 |
| Irgacure 2959 | 2.0 |
| Byk 331 | 0.1 |
| Stabiliser UV12 | 0.5 |
| Total | 100.0 |

### Comparative Example 1

A comparative solvent UV hybrid ink with a similar formulation to Example 1 was prepared but without Cab-o-sil M5 by mixing the components of Table 3. The amounts are provided in weight percentages based on the total weight of the composition.

**Table 3**

| Components | Weight percentage |
|---|---|
| Gamma Butyrolactone | 16.3 |
| DEGDEE | 50.4 |
| Genomer 4215 | 10.5 |
| Nippon Gohsei UV7630B | 10.2 |
| Cyan pigment dispersion | 6.0 |
| Irgacure 819 | 4.0 |
| Irgacure 2959 | 2.0 |
| BYK331 | 0.1 |
| Stabiliser UV12 | 0.5 |
| Total | 100.0 |

Filter times of both of the inks of Example 2 and Comparative Example 1 were checked. For both of the inks, 50 mL passed through a 1.5 µm filter in less than 65 seconds.

The viscosity profiles of both of the inks of Example 2 and Comparative Example 1 over a range of shear values up to 1,000 s⁻¹ were compared using an ARG 2 rheometer fitted with an aluminium lightweight cone, 60 mm diameter with a one degree angle.

As can be seen in Fig. 2, the ink of Example 1 was found to exhibit a strong shear thinning behaviour, whereas the ink of Comparative Example 1 had a completely flat viscosity profile, i.e. displayed Newtonian behaviour.

The inks of Example 2 and Comparative Example 1 were also evaluated for jetting performance in a jet rig fitted with a Ricoh generation 4 printhead.

The inks from Example 2 and Comparative Example 1 were both assessed for the number of lost or deviated nozzles over a frequency sweep up to 50 KHz.

The following conditions were used:
Meniscus pressure: 1.6 KPa
Printhead temperature: 35 °C
Pulse duration: 2.5 µs

### Binary mode (single drop size)

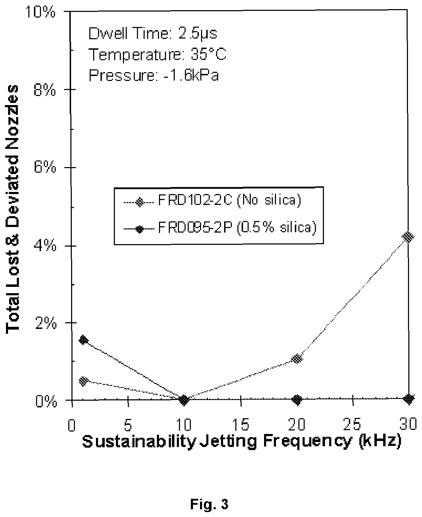

As can be seen in Fig. 3, Comparative Example 1 (labelled as FRD102-2C) has good jetting reliability up to 20 KHz but thereafter the number of lost or deviated nozzles rapidly increases; 5% of nozzles being lost or deviated at 30 KHz.

However, under the same conditions, Example 2 of the present invention (labelled FRD102 - 2P) still performs well at 30 KHz with no nozzle loss.

## Claims

1. A method of producing a shear-thinning silica dispersion for a radiation-curable inkjet ink comprising:
providing a composition comprising fumed silica, an organic solvent and/or a reactive diluent and a radiation-curable oligomer and/or a passive thermoplastic resin;
bead milling the composition using milling beads having a mean diameter of 0.3 to 1.0 mm, wherein the ratio of the volume of milling beads present in the composition during bead milling in mL to the weight of the composition in grams is 0.5 to 2.0 : 1.0, and wherein the viscosity of the composition during bead milling is 50-800 mPas at 1,000 s⁻¹; and
removing the composition from the mill.

2. A method as claimed in claim 1, wherein the organic solvent and/or reactive diluent is non-wetting.

3. A method as claimed in any preceding claim, wherein the fumed silica is hydrophilic silica.

4. A method as claimed in any preceding claim, wherein the viscosity of the composition during bead milling is 200-600 mPas at 1,000 s⁻¹.

5. A method as claimed in any preceding claim, wherein the milling beads have a mean diameter of 0.5 to 1 mm.

6. A method as claimed in any preceding claim, wherein the ratio of the volume of milling beads present in the composition during bead milling in mL to the weight of the composition in grams is 0.7-1.5 : 1.0.

7. A method as claimed in any preceding claim, wherein the bead milling occurs at a milling speed of 3,000 to 6,000 rpm and a tip speed of 20.6 to 25.4 m/s.

8. A radiation-curable inkjet ink comprising: a shear-thinning silica dispersion obtainable by the method as claimed in any preceding claim, wherein the inkjet ink comprises at least 0.2 wt% fumed silica dispersed in the ink based on the total weight of the ink, wherein the viscosity of the inkjet ink at a shear rate of 5 s⁻¹ is 10% or more than the viscosity of the inkjet ink at a shear rate of 1,000 s⁻¹, and wherein the particle size of dispersed particles in the ink is such that the ink, when subjected to vacuum filtration, is capable of passing through a 3 µm filter at a pressure of 40 KPa.

9. An inkjet ink as claimed in claim 8 comprising at least 0.5 wt% fumed silica based on the total weight of the inkjet ink.

10. A method of ink-jet printing, comprising printing the inkjet ink as claimed in claims 8 or 9 on to a substrate and curing the ink.

11. A substrate having the inkjet ink as claimed in claims 8 or 9 printed thereon.

## Patentansprüche

1. Verfahren zur Herstellung einer scherverdünnenden Siliciumdioxid-Dispersion für eine strahlungshärtbare Tintenstrahltinte, umfassend:
Bereitstellen einer Zusammensetzung, umfassend pyrogenes Siliciumdioxid, ein organisches Lösungsmittel und/oder ein reaktives Verdünnungsmittel und ein strahlungshärtbares Oligomer und/oder ein passives thermoplastisches Harz;
Kugelmahlen der Zusammensetzung unter Verwendung von Mahlkugeln, die einen mittleren Durchmesser von 0,3 bis 1,0 mm aufweisen, wobei das Verhältnis des Volumens der Mahlkugeln, die in der Zusammensetzung während des Kugelmahlens in ml zu dem Gewicht der Zusammensetzung in Gramm vorhanden sind, 0,5 bis 2,0:1,0 ist, und wobei die Viskosität der Zusammensetzung während des Kugelmahlens 50-800 mPas bei 1000 s⁻¹ ist; und
Entfernen der Zusammensetzung aus der Mühle.

2. Verfahren nach Anspruch 1, wobei das organische Lösungsmittel und/oder reaktive Verdünnungsmittel nicht benetzend ist.

3. Verfahren nach einem der vorherigen Ansprüche, wobei das pyrogene Siliciumdioxid hydrophiles Siliciumdioxid ist.

4. Verfahren nach einem der vorherigen Ansprüche, wobei die Viskosität der Zusammensetzung während eines Kugelmahlens 200-600 mPas bei 1000 s⁻¹ ist.

5. Verfahren nach einem der vorherigen Ansprüche, wobei die Mahlkugeln einen mittleren Durchmesser von 0,5 bis 1 mm aufweisen.

6. Verfahren nach einem der vorherigen Ansprüche, wobei das Verhältnis des Volumens der Mahlkugeln, die in der Zusammensetzung während eines Kugelmahlens in ml zu dem Gewicht der Zusammensetzung in Gramm vorhanden sind, 0,7-1,5:1,0 ist.

7. Verfahren nach einem der vorherigen Ansprüche, wobei das Kugelmahlen bei einer Mahlgeschwindigkeit von 3000 bis 6000 U/min und einer Spitzengeschwindigkeit von 20,6 bis 25,4 m/s erfolgt.

8. Strahlungshärtbare Tintenstrahltinte, umfassend: eine scherverdünnende Siliciumdioxid-Dispersion, die durch das Verfahren erlangt werden kann, wie es in einem vorherigen Anspruch beansprucht ist, wobei die Tintenstrahltinte mindestens 0,2 Gewichtsprozent pyrogenes Siliciumdioxid umfasst, das in der Tinte dispergiert ist, basierend auf dem Gesamtgewicht der Tinte, wobei die Viskosität der Tintenstrahltinte bei einer Scherungsrate von 5 s⁻¹ 10 % oder mehr als die Viskosität der Tintenstrahltinte bei einer Scherungsrate von 1000 s⁻¹ ist, und wobei die Partikelgröße von dispergierten Partikeln in der Tinte derart ist, dass die Tinte, wenn sie einer Vakuumfiltration unterzogen wird, in der Lage ist, bei einem Druck von 40 KPa durch einen 3 µm-Filter zu verlaufen.

9. Tintenstrahltinte nach Anspruch 8, umfassend mindestens 0,5 Gewichtsprozent pyrogenes Siliciumdioxid, bezogen auf das Gesamtgewicht der Tintenstrahltinte.

10. Verfahren zum Tintenstrahldrucken, umfassend ein Drucken der Tintenstrahltinte nach Anspruch 8 oder 9 auf ein Substrat und Härten der Tinte.

11. Substrat, auf das die in Anspruch 8 oder 9 beanspruchte Tintenstrahltinte aufgedruckt ist.

## Revendications

1. Procédé de production d'une dispersion de silice par fluidification par cisaillement pour une encre pour jet d'encre durcissable par rayonnement comprenant :
la fourniture d'une composition comprenant de la silice fumée, un solvant organique et/ou un diluant réactif et un oligomère durcissable par rayonnement et/ou une résine thermoplastique passive ;
le broyage par billes de la composition à l'aide de billes de broyage possédant un diamètre moyen allant de 0,3 à 1,0 mm, ledit rapport du volume de billes de broyage présentes dans la composition durant le broyage des billes en ml sur le poids de la composition en grammes étant de 0,5 à 2,0 : 1,0, et ladite viscosité de la composition durant le broyage par billes étant de 50 à 800 mPas à 1 000 s⁻¹ ; et
le retrait de la composition du broyeur.

2. Procédé selon la revendication 1, ledit solvant organique et/ou ledit diluant réactif étant non mouillant.

3. Procédé selon l'une quelconque des revendications précédentes, ladite silice fumée étant de la silice hydrophile.

4. Procédé selon l'une quelconque des revendications précédentes, ladite viscosité de la composition durant le broyage par billes étant de 200 à 600 mPas à 1 000 s⁻¹.

5. Procédé selon l'une quelconque des revendications précédentes, lesdites billes de broyage possédant un diamètre moyen allant de 0,5 à 1 mm.

6. Procédé selon l'une quelconque des revendications précédentes, ledit rapport du volume de billes de broyage présentes dans la composition durant le broyage par billes en ml sur le poids de la composition en grammes étant de 0,7 à 1,5: 1,0.

7. Procédé selon l'une quelconque des revendications précédentes, ledit broyage par billes se produisant à une vitesse de broyage allant de 3 000 à 6 000 tr/min et une vitesse de pointe allant de 20,6 à 25,4 m/s.

8. Encre pour jet d'encre durcissable par rayonnement comprenant : une dispersion de silice par fluidification par cisaillement pouvant être obtenue par le procédé selon l'une quelconque des revendications précédentes, ladite encre pour jet d'encre comprenant au moins 0,2 % en poids de silice fumée dispersée dans l'encre sur la base du poids total de l'encre, ladite viscosité de l'encre pour jet d'encre à un taux de cisaillement de 5 s⁻¹ étant supérieur de 10 %, ou plus, à la viscosité de l'encre pour jet d'encre à un taux de cisaillement de 1000 s⁻¹, et ladite taille de particule des particules dispersées dans l'encre étant de telle que l'encre, lorsqu'elle est soumise à une filtration sous vide, soit capable de passer à travers un filtre de 3 µm à une pression de 40 KPa.

9. Encre pour jet d'encre selon la revendication 8, comprenant au moins 0,5 % en poids de silice fumée sur la base du poids total de l'encre pour jet d'encre.

10. Procédé d'impression à jet d'encre, comprenant l'impression de l'encre pour jet d'encre selon les revendications 8 ou 9 sur un substrat et le durcissement de l'encre.

11. Substrat sur lequel est imprimée l'encre pour jet d'encre selon les revendications 8 ou 9.
